# EUROPEAN PATENT APPLICATION

(11) **EP 2 141 373 A1**
(43) Date of publication of application: **06.01.2010**
(21) Application number: 08740924.9
(22) Date of filing: 30.04.2008
(51) Int. Cl.: F16C 19/16, F01D 25/16, F02B 39/00, F16C 25/08, F16C 33/32, F16C 33/66

(54) **BEARING DEVICE FOR TURBOCHARGER**

(30) Priority: 01.05.2007 JP 2007120437
(71) Applicant: JTEKT Corporation, Osaka-shi Osaka 542-8502 (JP)
(72) Inventor: BANDO, Shigenori, Osaka-shi Osaka 542-8502 (JP); FUJII, Yoshiki, Osaka-shi Osaka 542-8502 (JP)
(74) Representative: Schaeberle, Steffen
(86) International application number: PCT/JP2008/058256
(87) International publication number: WO 2008/136481

(57) **Abstract**

In an angular ball bearing, a distance between outer rings and a distance between inner rings are set in such a manner that a clearance inside the bearing, when a turbocharger is in operation, is a positive clearance.

## Description

### Technical Field

The present invention relates to a bearing apparatus for a turbocharger having a turbine which is rotated with exhaust gas of high temperature, and more particularly to the bearing apparatus for supporting a rotation shaft of the turbocharger so as to rotate by a rolling bearing.

### Background Art

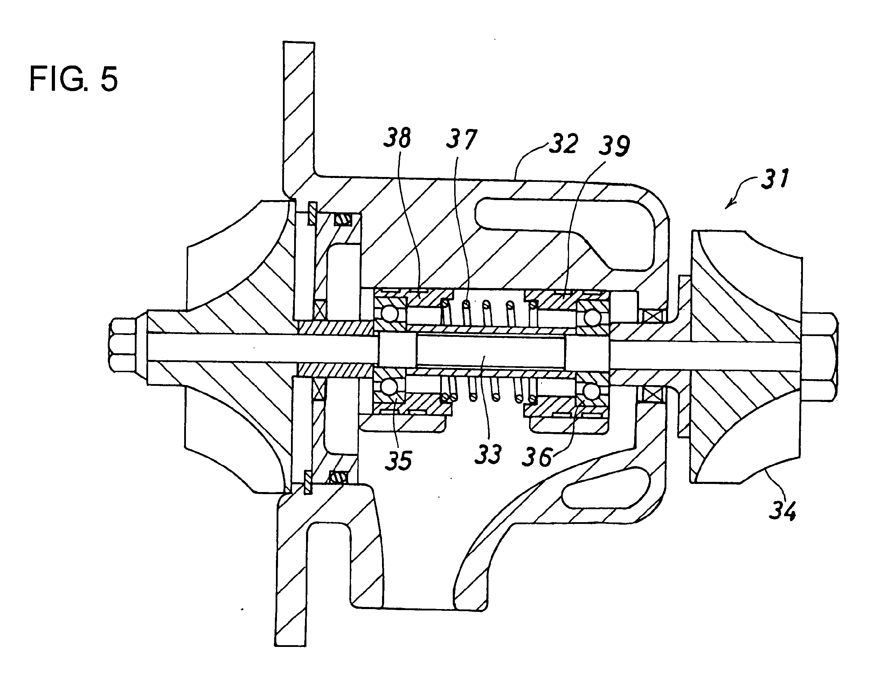

As a bearing apparatus 31 which is used in a turbocharger in which a turbine 34 to be rotated with exhaust gas is provided at one end of a rotation shaft 33 as shown in Fig. 5, there has been conventionally disclosed such a structure that double row angular ball bearings 35, 36 for supporting the rotation shaft 33 are held in a housing 32 which is provided with an inlet and an outlet for lubricating oil, a cooling water jacket, etc., and the respective angular ball bearings 35, 36 are mounted to an inner face of the housing 32 by way of a pair of sleeves 38, 39 which are preloaded with a coil spring 37 to cope with high speed rotation of the rotation shaft 33 (for example, Japanese Patent Publication No. JP-A-2000-248954).

Although not shown in a drawing, in Japanese Patent PublicationNo. JP-A-H08-261230, itisproposedthatinabearing apparatus for a turbocharger, a preload is given by locating method as means for applying the preload, without using a coil spring for preloading.

### Disclosure of the Invention

### Problems that the Invention is to Solve

There is such a problem in the turbocharger that balls of the angular ball bearing are damaged with a foreign substance in the lubricating oil, and strange noise occurs. When the preload is given to the angular ball bearing, the foreign substance tends to be caught in a rolling part of the angular ball bearing. Moreover, because an axis of rotation of each of the balls becomes nearly fixed, and a rolling position of the ball is not varied but fixed, a band-shape abrasion is liable to occur in a particular part of the ball when the foreign substance has been caught, which is unfavorable in respect of damage given to the ball.

An object of the invention is to provide a bearing apparatus for a turbocharger in which damages of balls are depressed, and stable rotation can be obtained in a range from low temperature to high temperature.

### Means for Solving the Problems

According to this invention, there is disclosed a bearing apparatus for a turbocharger to be used in the turbocharger provided with a turbine which is rotated with an exhaust gas of high temperature, at one end of a rotation shaft, and a plurality of ball bearings for supporting the rotation shaft,
**characterized in that** a distance between outer rings and a distance between inner rings in each of the ball bearings are set in such a manner that a clearance inside the bearing is a positive clearance when the turbocharger is in operation.

The ball bearing is generally an angular ball bearing, but not limited to this.

The outer rings of the ball bearing are mounted to a housing by tight fitting, press-fitting of a transition fit or loose fitting of a clearance fit, etc., and the inner rings are mounted to the rotation shaft by tight fitting, press-fitting of a transition fit or loose fitting of a clearance fit, etc. Material for the bearing may be either ceramic or metallic bearing steel, but not particularly limited.

In each of the ball bearings, the outer rings and the inner rings are respectively assembled to the housing and the rotation shaft in a state positioned and fixed with respect thereto, that is, in a located state as the bearing. In this assembled state, the clearance inside the bearing may be either of a positive clearance, a negative clearance and a zero clearance.

On the other hand, when the turbocharger is in operation, temperature of the ball bearing rises up to, for example, about 200 to 300 °C, and the rotation shaft, housing, inner rings, outer rings, and balls are expanded with heat. As the results, the clearance inside the bearing is varied from the time when the bearing was assembled. When the bearing is assembled, a distance Wo between the respective outer rings and a distance Wi between the respective inner rings are set so that the clearance inside the bearing may be the positive clearance when the turbocharger is in operation.

As described above, applying a preload is unfavorable in respect of damage given to the balls. By keeping an absolute value of the clearance inside the bearing within a determined range of the positive clearance, rolling positions of the balls are varied, whereby abrasion of the balls is depressed in a wide range from low temperature to high temperature. As the results, occurrence of strange noise due to damage of the balls is prevented, and stable rotation can be obtained.

The distance between the outer rings can be set at a predetermined value Wo, by forming, for example, a pair of positioning parts for the outer rings in the housing so that a distance between them may be Wo, and by abutting respective end faces of the outer rings at inner sides in an axial direction against these positioning parts. The distance between the inner rings can be set at a predetermined value Wi, by interposing, for example, a spacer having the length Wi between the inner rings, and by abutting respective end faces of the inner rings at inner sides in an axial direction against end faces of this spacer. For setting the distance between the outer rings and the distance between the inner rings at the determined values, various methods can be employed. For example, a spacer may be interposed between the outer rings, and positioning parts for the inner rings maybe formed on the rotation shaft. Moreover, the outer rings or the inner rings of a plurality of the ball bearings may be designed as an integral type.

Generally, the turbocharger is provided with a turbine impeller at one end of the rotation shaft, and a compressor impeller at the other end thereof, and an exhaust gas of high temperature, for example, at about 900°C is supplied to the turbine. This bearing apparatus can be applied not only to an ordinary turbocharger, but also to a turbocharger of an improved type such as a variable nozzle type, a two-stage type, and so on. Moreover, the turbocharger may be used for a diesel engine, and for a gasoline engine.

Out of the outer rings, inner rings, and balls, at least the balls are preferably ceramics. In this manner, variation of the clearance inside the bearing due to temperature changes during operation is depressed, and stable rotation can be obtained in a range from low temperature to high temperature. At the same time, damage of the balls is further reduced, whereby low noise and long life of the bearing apparatus can be achieved.

Additionally, it would be preferable that the clearance inside the bearing is set to be larger than 20µm, and smaller than 60µm, and further, it would be more preferable that the clearance is set to be larger than 40µm, and smaller than 60µm. In this manner, the clearance inside the bearing can be made proper, when the temperature has dropped, and at the same time, vibration of the rotation shaft is decreased, whereby the impeller mounted to the rotation shaft can be prevented from interfering with a case.

### Advantage of the Invention

According to the bearing apparatus for the turbocharger of this invention, by setting the distance between the outer rings and the distance between the inner rings in such a manner that the clearance inside the bearing may be the positive clearance, and by enabling the positive clearance to be maintained even when the turbocharger is in operation, it is possible to remarkably reduce damage of the balls which occurs when a foreign substance is caught in a rolling part of the ball bearing.

### Brief Description of the Drawings

Fig. 1 is a vertical sectional view showing a bearing apparatus for a turbocharger in a first embodiment according to the invention.
Fig. 2 is a vertical sectional view showing a bearing apparatus for a turbocharger in a second embodiment according to the invention.
Fig. 3 is a vertical sectional view showing a bearing apparatus for a turbocharger in a third embodiment according to the invention.
Fig. 4 is a vertical sectional view showing a bearing apparatus for a turbocharger in a fourth embodiment according to the invention.
Fig. 5 is a vertical sectional view showing, as an example, a conventional turbocharger in which the bearing apparatus for the turbocharger according to the invention is used.

### Best Mode for Carrying Out the Invention

Now, embodiment of the invention will be described with reference to the drawings. It is to be noted that in the following description, a right side and a left side correspond to right and left in the respective drawings.

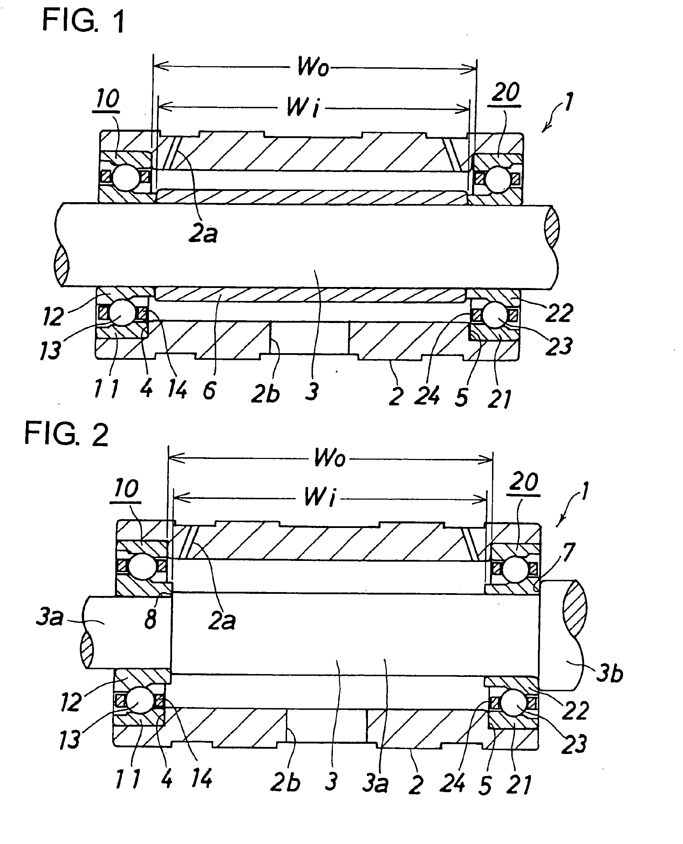

Fig. 1 shows a bearing apparatus for a turbocharger in a first embodiment according to the invention. A bearing apparatus 1 for a turbocharger includes a pair of right and left angular ball bearings 10, 20 which are arranged back to back. The angular ball bearings 10, 20 respectively have outer rings 11, 21 mounted to a housing 2, inner rings 12, 22 mounted to a rotation shaft 3, a plurality of balls 13, 23 disposed between the rings 11, 12 and 21, 22, and cages 14, 24 for holding a plurality of the balls 13, 23.

The turbocharger having the structure as shown in Fig. 5, for example, drives a turbine using exhaust energy of an engine, and compresses air with an impeller which is coaxially connected to the turbine by way of the rotation shaft 3 thereby to supply the air to the engine. Because the rotation shaft 3 is rotated at high speed of several ten thousands to several hundred thousands per minute, and the turbine is subjected to the exhaust gas of high temperature, the bearing apparatus 1 for the turbocharger is used under severe condition that it is subjected to the high speed rotation in a high temperature environment.

The housing 2 is provided with an inlet 2a and an outlet 2b for lubricating oil, and the angular ball bearings 10, 20 are lubricated with the lubricating oil which has been introduced from the lubricating oil inlet 2a of the housing 2. Foreign substance such as abrasion powder is mixed in this lubricating oil, and when this foreign substance is caught in the rolling part, this is one of reasons for damage of the angular ball bearings 10, 20.

The outer rings 11, 21 and the inner rings 12, 22 are formed of high carbon chrome bearing steel (JIS standard SUJ2), heat resisting and corrosion resisting alloy (AISI standard M-50), high speed tool steel SKH according to JIS standard or the like, and have been appropriately quenched and annealed. The balls 13, 23 are formed of ceramic material. As the ceramic material, silicon nitride Si₃N₄, using yttria Y₂O₃ and alumina Al₂O₃, and further, aluminum nitride AlN, and titan oxide TiO₂ adequately, as sintering assistant, is employed as a main component. Besides, alumina Al₂O₃, silicone carbide SiC, zirconia ZrO₂, aluminum nitride AlN, etc. can be employed.

Positioning step parts 4, 5 are formed at inner diameter sides of the housing 2 in its right and left end parts, by providing annular cut-out parts having an outer diameter which is equal to an outer diameter of the outer rings 11, 21. The right and left outer rings 11, 21 are press-fitted in such a manner that their inner end faces in an axial direction are abutted against these positioning parts 4, 5, whereby a distance Wo between the right and left outer rings 11, 21 is set to be a determined value.

A spacer 6 is provided between the right and left inner rings 12, 22. By abutting respective inner end faces of the inner rings 12, 22 in the axial direction against right and left end faces of this spacer 6, a distance Wi between the right and left inner rings 12, 22 is set to be a determined value. The distance Wi between the inner rings 12, 22 is set to be smaller than the distance Wo between the outer rings 11, 21, and the distance Wi between the inner rings 12, 22 is secured by press-fitting the inner rings 12, 22 to the rotation shaft 3, after the outer rings 11, 21 have been mounted to the housing 2.

A clearance inside the bearing 5 in each of the angular ball bearings 10, 20 is not in a state preloaded with a spring or the like as in the prior art, but the clearance is a positive clearance (5 > 0). Thin clearance inside the bearing is, of course, the positive clearance not only in an assembled state, but also the positive clearance even when the turbocharger is in operation. The values of the distance Wo between the outer rings 11, 21 and the distance Wi between the inner rings 12, 22 are set, considering the state when the turbocharger is in operation. Moreover, the clearance inside the bearing 5 is set based on a high temperature condition (for example, bearing temperature of 200 to 300°C) when the turbocharger is in operation.

As described above, according to the invention, it would be sufficient that the clearance inside the bearing while the turbocharger is in operation is the positive clearance (5 > 0), but the clearance inside the bearing may be preferably 20µm < 5 < 60µm, and more preferably 40µm < δ < 60µm.
The preferable lower limit of the clearance inside the bearing δ is set to be 20µm and 40µm, for the following reason. It is considered that a working time of the turbocharger is shortened and the temperature of the bearing drops, depending on a working condition of the turbocharger. On this occasion, bearing rings formed of metal are shrunk in size as compared with in a state of the high temperature (for example, the bearing temperature of 200 to 300°C), whereas the balls formed of ceramic are hardly shrunk in size, and hence, the clearance inside the bearing tends to become smaller (choked). Therefore, considering a choke of the clearance inside the bearing when the temperature has dropped, it would be preferable that the lower limit of the clearance inside the bearing δ is set to be 20µm and 40µm.
The preferable upper limit of the clearance inside the bearing δ is set to be 60µm, for the following reason. In case where the clearance inside the bearing δ becomes larger, a shaft runout of the rotation shaft 3 and accompanying vibration are increased. Moreover, when the shaft runout grows larger than a clearance between a turbine impeller provided at an end of the rotation shaft 3 and a case of the turbocharger, there occurs a problem that the impeller may interfere with the case. Therefore, it would be preferable that the upper limit of the clearance inside the bearing δ is set to be 60µm.

Although a radial clearance and an axial clearance are considered as the clearance inside the bearing, they can be adequately set according to the condition for use. For example, both of them can be set to be the positive clearance or either of them can be set to be the positive clearance.

In case where a preload is given to the angular ball bearings 10, 20 with a coil spring or the like as in the prior art, a foreign substance mixed into the lubricating oil is caught into the rolling parts of the angular bearings 10, 20, and abrasion occurs in the balls 13, 23. Damages of the balls 13, 23 are increased, because pressure on contact faces is large.

On the other hand, according to the bearing apparatus 1 for the turbocharger as described above, the positive clearance is maintained even under a high temperature condition when the turbocharger is in operation, and an absolute value of the clearance is kept within a determined range, since the distance Wo between the outer rings 11, 21 and the distance Wi between the inner rings 12, 22 have been set. As the results, damage of the balls 13, 23 can be depressed in a wide range from low temperature to high temperature, and stable rotation can be obtained.

Means for setting the distance Wo between the outer rings 11, 21 and the distance Wi between the inner rings 12, 22 are not limited to the above described embodiment, but various means can be employed, as described below. In the following description, the same components as in the first embodiment will be denoted with the same reference numerals and description of them will be omitted.

Fig. 2 shows a bearing apparatus for a turbocharger in a second embodiment according to the invention. In this second embodiment, the positioning step parts 4, 5 for the outer rings 11, 21 which are provided in the housing 2 are the same as in the first embodiment. Moreover, the spacer 6 between the right and left inner rings 12, 22 used in the first embodiment is omitted, and positioning step parts 7, 8 for positioning the inner rings 12, 22 are provided on the rotation shaft 3, by forming steps in the rotation shaft 3. The rotation shaft 3 has a large diameter part 3b which is larger in diameter than a middle part 3a and continued to a right side of the middle part 3a, and a small diameter part 3c which is smaller in diameter than the middle part 3a and continued to a left side of the middle part 3a. The inner ring 22 at the right side is press-fitted to the middle part 3a from the left, having its right face abutted against the stepped part 7 which is positioned on a left face of the large diameter part 3b, and the inner ring 12 at the left side is press-fitted to the small diameter part 3c from the left, having its right face abutted against the stepped part 8 which is positioned on a left face of the middle part 3a. In this manner, the distance Wi between the inner rings 12, 22 is obtained by deducting an axial length of the inner ring 22 at the right side from an axial length of the middle part 3a of the rotation shaft 3, in this embodiment.

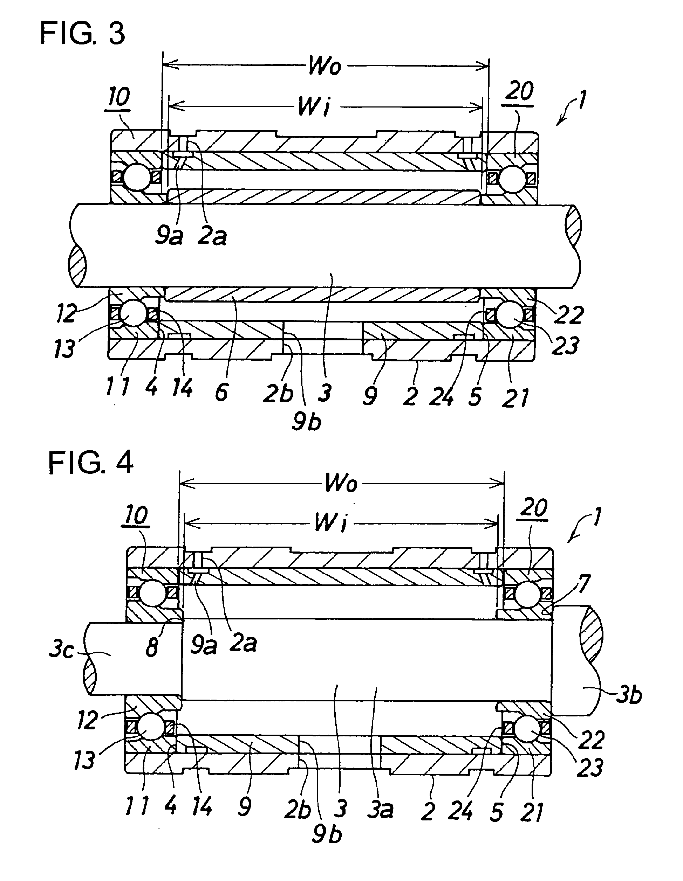

Fig. 3 shows a bearing apparatus for a turbocharger in a third embodiment according to the invention. In this third embodiment, the spacer 6 interposed between the right and left inner rings 12, 22 is the same as in the first embodiment, and another spacer 9 is used instead of the positioning step parts 4, 5 for the outer rings 11, 21 which are provided in the housing 2 in the first embodiment.

Specifically, the spacer 9 is also provided between the right and left outer rings 11, 21, and the distance Wo between the right and left outer rings 11, 21 is set to be the determined value, by abutting the end faces of the outer rings 11, 21 at inner sides in the axial direction against right and left end faces of this spacer 9.

The spacer 9 which is interposed between the right and left outer rings 11, 12 is provided with an inflow passage 9a for the lubricating oil and a discharge passage 9b for the lubricating oil which are respectively communicated with the inlet 2a and outlet 2b for the lubricating oil in the housing 2.

Fig. 4 shows a bearing apparatus for a turbocharger in a fourth embodiment according to the invention. In this fourth embodiment, the spacer 6 is not provided between the right and left inner rings 12, 22, and the spacer 9 is interposed between the outer rings 11, 21. Specifically, the inner rings 12, 22 are positioned in the same manner as in the second embodiment which is shown in Fig. 2, and the outer rings 11, 21 are positioned in the same manner as in the third embodiment which is shown in Fig. 3.

## Claims

1. A bearing apparatus used in a turbocharger in which a turbine rotated by an exhaust gas is provided at one end of a rotation shaft, the bearing apparatus comprising a plurality of ball bearings that supports the rotation shaft,
wherein a distance between outer rings and a distance between inner rings in each of the ball bearings are set in such a manner that a clearance inside the bearing is a positive clearance when the turbocharger is in operation.

2. The bearing apparatus for the turbocharger according to claim 1, wherein a preload is not given to each of the ball bearings.

3. The bearing apparatus for the turbocharger according to claim 1 or 2, wherein at least ball of the bearing is made of ceramics.

4. The bearing apparatus for the turbocharger according to any one of claims 1 to 3, wherein the clearance inside the bearing is set larger than 20µm and smaller than 60µm.

5. The bearing apparatus for the turbocharger according to claim 4, wherein the clearance inside the bearing is set larger than 40µm.
